# EUROPÄISCHE PATENTSCHRIFT

(11) **EP 0 552 752 B1**
(45) Veröffentlichungstag und Bekanntmachung des Hinweises auf die Patenterteilung: **20.12.1995**
(21) Anmeldenummer: 93100849.4
(22) Anmeldetag: 21.01.1993
(51) Int. Cl.: B65G 60/00, B65G 47/51, B65G 59/06

(54) **Spreizmagnet-Pufferschacht**
Expanding magnet buffer shaft
Gaine tampon à aimant écarteur

(30) Priorität: 23.01.1992 DE 4201729
(43) Veröffentlichungstag der Anmeldung: 28.07.1993
(73) Patentinhaber: NSM MAGNETTECHNIK GMBH, D-59399 Olfen (DE)
(72) Erfinder: Langenberg, Josef, D-4715 Ascheberg-Herbern (DE); Watermeier, Theo, D-4716 Olfen (DE)
(74) Vertreter: Vollbach, Hans, Dipl.-Ing.

(56) Entgegenhaltungen:
- DE-B- 1 267 614
- DE-C- 3 336 151
- US-A- 2 795 340
- US-A- 4 963 072

## Beschreibung

Die Erfindung betrifft einen Spreizmagnet-Pufferschacht entsprechend der im Oberbegriff des Anspruchs 1 angegebenen Art.

Mit Spreizmagnetsystemen ausgestattete Pufferschächte sind in verschiedenen Ausführungen bekannt und werden vor allem in der Emballagenindustrie zur Magazinierung von Dosendeckeln u.dgl. in Form von Deckelpaketen eingesetzt (DE-C-33 36 151). Zumeist werden die Spreizmagnet-Pufferschächte als Vertikal-Pufferschächte ausgeführt und an ihrer Oberseite über den Deckeleinlauf mit den zu stapelnden Dosendeckeln beschickt. Die an den seitlichen Wandungsteilen des Pufferschachtes angeordneten, aus Permanentmagneten bestehenden Spreizmagnete halten die von oben in den Pufferschacht eintretenden Dosendeckel in der Horizontallage und bewirken während des freien Falls eine magnetische Lagestabilisierung der Dosendeckel, so daß diese sich auf das schon im unteren Bereich des Pufferschachtes befindliche Deckelpaket Lagerichtig ablegen. Das Spreizmagnetsystem, dessen Magnetfelder den Pufferschacht quer durchsetzen, bewirkt eine gegenseitige Abspreizung der in der Pufferzone des Pufferschachtes einlaufenden Dosendeckel. Aufgrund des magnetischen Spreizeffektes schweben die einlaufenden Dosendeckel im oberen Bereich des Pufferschachtes federnd mit Abständen übereinander, wobei sich diese Spreizabstände bei weiterer Befüllung des Pufferschachtes ständig verringern, bis schließlich die Dosendeckel im unteren Bereich des Pufferschachtes auf Block liegen, also ein geschlossenes Deckelpaket bilden.

Bei einem seit langem bekannten Spreizmagnet-Pufferschacht der gattungsgemäßen Art (US-A- 2 795 340) sind über die Höhe des Pufferschachtes mehrere permanentmagnetische Spreizzonen vorgesehen. Dabei dient die obere, einlaufseitige Spreizzone zur Ausrichtung der über den Einlauf infolge zugeführten Deckel in die Horizontallage sowie zur Pufferung der Deckel und Führung derselben bei ihrer Abwärtsbewegung im Pufferschacht. Mit zunehmender Befüllung der oberen Spreiz- und Pufferzone werden die Deckel infolge in die darunter befindlichen permanentmagnetischen Spreizzonen überführt, die einen kontrollierten Deckelfluß bei Wahrung der Horizontallage der Deckel bewirken. Am unteren Auslaufende des Puffermagazins werden schließlich die Deckel z.B. mittels einer angetriebenen Schneckenaustragsvorrichtung oder mittels einer handbetätigten Messer-Abteilvorrichtung vom Deckelpaket abgetrennt und aus dem Pufferschacht abgezogen.

Die bekannten Spreizmagnet-Pufferschächte werden häufig als Zwischenpuffer bei Maschinenverkettungen vorgesehen, z.B. zwischen einer Deckelpresse bzw. Deckelstanze und einer Folgemaschine, die z.B. aus einer Gummiermaschine oder einer kombinierten Gummier- und Deckel-Anrollmaschine besteht. Die im Pufferschacht in Form des Deckelpakets magazinierten Dosendeckel müssen zumeist vereinzelt dem Pufferschacht entnommen und im Arbeitstakt der Folgemaschine dieser zugeführt werden. Für die Einzelentnahme der gestapelten Dosendeckel werden die Spreizmagnet-Pufferschächte an ihrem unteren Deckelauslauf mit einer Abteilvorrichtung versehen, die mit Hilfe von Abteilmessern oder Klinkenschienen od.dgl. die Deckel aus dem magazinierten Deckelstrang abteilen bzw. vereinzeln. Die gebräuchlichen Abteilvorrichtungen lassen sich nur dann zuverlässig einsetzen, wenn die magazinierten Dosendeckel an ihrem Umfangsrand mit einer Anrollung versehen sind, so daß zwischen den im Deckelpaket übereinander liegenden Dosendeckel jeweils ausgeprägte Eingriffslücken für die Abteilmesser od.dgl. gebildet werden. Sind solche Eingriffslücken nicht vorhanden, wie dies bei gestapelten Dosendeckeln ohne Anrollung oder aber z.B. bei flach aufeinander liegenden scheibenförmigen Elementen ohne entsprechende Umfangsprofilierung der Fall ist, so ist eine Vereinzelung der zu dem Paket gestapelten Elemente mit Hilfe der bekannten Abteilvorrichtung nicht möglich.

Es ist ferner bekannt (DE-B-12 67 614), Bleche aus einem zuvor gebildeten Blechstapel vereinzelt dadurch zu entnehmen, daß die jeweils unteren Bleche z.B. mit Hilfe von angetriebenen genuteten Wellen elastisch durchgebogen und anschließend wieder freigegeben werden, wobei sie vereinzelt in ein Magnetfeld gelangen, das die Bleche in Schwebe und im Abstand zueinander hält. Die so vereinzelten Bleche werden dann mittels einer Fördervorrichtung, z.B. mit Hilfe von angetriebenen Schnecken aus dem Magnetfeld herausgeführt und einer Transportvorrichtung, z.B. einem Magnetbandförderer, zum Abtransport übergeben. Bei dieser bekannten Vorrichtung handelt es sich nicht um einen der Stapelbildung dienenden und die Stapelbildung magnetisch beeinflussenden Spreizmagnet-Pufferschacht.

Ausgehend von einem Spreizmagnet-Pufferschacht der bekannten, gattungsgemäßen Art liegt der Erfindung vornehmlich die Aufgabe zugrunde, diesen Spreizmagnet-Pufferschacht so auszugestalten, daß die zu einem Paket gestapelten Einzelelemente auch dann vereinzelt dem Pufferschacht zuverlässig entnommen werden können, wenn zwischen den jeweils übereinander liegenden Elementen keine geeignete Eingriffslücke für Abteilmesser oder sonstige Trennelemente einer mechanischen Abteileinrichtung vorhanden sind.

Diese Aufgabe wird erfindungsgemäß mit den im Kennzeichen des Patentanspruchs 1 angegebenen Merkmalen gelöst.

Nach der Erfindung ist am Pufferschacht, d.h. im unteren Bereich seiner Spreizmagnet-Pufferzone, in der die aus Stahldeckeln bestehende Dosendeckel oder sonstige aus Stahl bestehenden stapelbaren Elemente zu dem Stapelpaket gestapelt und magaziniert werden, eine gesteuerte Brems- und Übergabevorrichtung vorgesehen, die einmal das Stapelpaket im Pufferschacht durch Bremswirkung zu halten in der Lage ist und die zum anderen zur Abteilung der jeweils unten im Stapelpaket liegenden Elemente vom darüber liegenden Stapelpaket und folglich zur Überführung der abgeteilten Elemente in die auslaufseitige Spreizzone dient, der sie dann z.B. zur Beförderung zu einer Folgemaschine vereinzelt entnommen werden können. Die Bremswirkung der Brems- und Übergabevorrichtung erfolgt durch Reibschluß am Umfang der im Fußbereich des Stapelpakets befindlichen Elemente, der Abteilvorgang durch gesteuerte motorische Betätigung dieser Vorrichtung, ohne daß hierfür aber ausgeprägte Eingriffslücken zwischen den Elementen (Dosendeckeln) vorhanden sein müssen. Dabei ist der Pufferschacht in seiner Längsrichtung in mehrere von Permanentmagnetsystemen gebildete Spreizmagnetsysteme mit spezifischen magnetischen Wirkungen unterteilt. In der oberen Spreizmagnet-Pufferzone werden die über den Einlauf zugeführten Elemente magnetisch ausgerichtet und geführt zu dem dichten Stapelpaket abgelegt, wie dies bei den bekannten Spreizmagnet-Pufferschächten der Fall ist. Im unteren Bereich unterhalb der Brems- und Übergabevorrichtung befindet sich die auslaufseitige magnetische Spreizzone, in der die mit Hilfe der Brems- und Übergabevorrichtung aus dem Stapelpaket abgeteilten Elemente magnetisch mit Abstand gegeneinander gespreizt im Schwebezustand gehalten werden, so daß aus dieser Spreizzone die Elemente bei Bedarf einzeln abgeführt werden können. Damit ist auch eine Einzelentnahme der magazinierten Elemente ohne die Verwendung von Abteilvorrichtungen der herkömmlichen Art erreichbar. Die Vereinzelung der gestapelten Elemente mit Hilfe der Brems- und Übergabevorrichtung läßt sich mit hohen Arbeitsgeschwindigkeiten und ohne die Gefahr einer Beschädigung der Elemente bzw. der Dosendeckel durchführen.

Es empfiehlt sich, die Anordnung so zu treffen, daß unterhalb der genannten Spreizmagnet-Pufferzone und der Brems- und Übergabevorrichtung eine magnetische Zwischenpufferzone vorhanden ist, an die sich zum Auslaufbereich des Pufferschachtes hin die genannte auslaufseitige magnetische Spreizzone anschließt, deren permanentmagnetisches Spreizmagnetsystem so ausgelegt ist, daß es die aus der Zwischenpufferzone zulaufenden Elemente für die Einzelentnahme magnetisch im Spreizzustand zueinander hält. Die von der Brems- und Übergabevorrichtung aus dem überlagernden Stapelpaket unterseitig abgeteilten Elemente fallen demgemäß zunächst in die Zwischenpufferzone, deren Spreizmagnetsystem so ausgelegt ist, daß bei Erreichen eines bestimmten Befüllungsgrades dieser Zwischenpufferzone die magnetische Haltekraft überschritten wird, so daß die Elemente unter Schwerkraftwirkung vereinzelt in die darunterliegende magnetische Spreizzone gelangen, in der sie durch die Magnetwirkung im Spreizzustand zueinander gehalten werden, so daß sie vereinzelt über den Auslauf des Pufferschachtes abgeführt werden können. Ein der auslaufseitigen Spreizzone zugeordneter Flächensensor od.dgl. kann die jeweilige Dichtigkeit der in der Spreizzone befindlichen Deckelsäule od.dgl. abtasten, so daß durch Ansteuerung der Brems- und Übergabevorrichtung sichergestellt werden kann, daß die Anzahl der in der Spreizzone befindlichen Elemente stets zumindest angenähert gleichbleibt. Das Magnetsystem der auslaufseitigen Spreizzone wird zweckmäßig so ausgebildet, daß es in dieser Zone zu einer sehr starken Abspreizung der Elemente zueinander kommt.

Die Anordnung der vorgenannten Zwischenpufferzone, die sich nur über einen vergleichsweise kleinen Längenbereich des Pufferschachtes zu erstrecken braucht und folglich eine nur vergleichsweise kleine Aufnahmekapazität für die Elemente aufweist, hat in Verbindung mit der nachgeschalteten auslaufseitigen Spreizzone u.a. den Vorteil, daß die Arbeitsvorgänge der Abteilung der Elemente aus der Pufferzone mit Hilfe der Brems- und Übergabevorrichtung und der Abführung der abgeteilten Elemente aus der auslaufseitigen Spreizzone im gewissen Umfang voneinander unabhängig sind, also entzerrt werden, und daß die Elemente je nach Bedarf auch in rascher Taktfolge der auslaufseitigen Spreizzone entnommen werden können. Außerdem braucht in diesem Fall die Brems- und Übergabevorrichtung, die sich im Schnittbereich zwischen der oberen Pufferzone und der darunterliegenden Zwischenpufferzone befindet, nicht unbedingt so ausgelegt und gesteuert zu werden, daß bei ihrer Ansteuerung jeweils nur ein einziges Element aus dem überlagernden Stapelpaket nach unten abgeteilt wird. Vielmehr können gegebenenfalls auch gleichzeitig mehrere, z.B. zwei oder drei Elemente aus dem Stapelpaket der Pufferzone abgeteilt werden, die dann in die Zwischenpufferzone fallen und hier bis zum Übergang in die auslaufseitige Spreizzone zwischengespeichert werden können.

Es empfiehlt sich weiterhin, das Magnetsystem der auslaufseitigen Spreizzone so auszubilden bzw. anzuordnen, daß sich im unteren Bereich dieser Spreizzone, also in Nähe des Auslaufs des Pufferschachtes ein sogenannter magnetischer Haltepunkt ergibt. Als magnetischer Haltepunkt ist diejenige Stelle zu verstehen, an der das Magnetfeld des Spreizmagnetsystems die größte magnetische Kraftliniendichte hat. Das Überschreiten des magnetischen Haltepunktes durch das im Magnetfeld schwebend gehaltene Element ist in diesem Fall nur durch eine zusätzliche äußere Krafteinwirkung möglich. Diese äußere Krafteinwirkung kann bei dem erfindungsgemäßen Pufferschacht auf mechanischem Wege, z.B. mittels eines Stößels od.dgl., aufgebracht werden. Vorzugsweise wird sie aber auf magnetischem Wege aufgebracht. Es empfiehlt sich daher, am Auslauf des Pufferschachtes eine gesteuerte elektrische Magnet-Abzugsvorrichtung anzuordnen, die bei Strombeaufschlagung das in der auslaufseitigen Spreizzone jeweils untenliegende Element unter Überwindung des magnetischen Haltepunktes aus der genannten Spreizzone zum Auslauf des Pufferschachtes hin abzieht. Diese gesteuerte Magnet-Abzugsvorrichtung wird zweckmäßig einem Abzugsförderer zugeordnet, der vorzugsweise aus einem Bandförderer od.dgl. besteht, der unterhalb der auslaufseitigen Spreizzone quer durch den Pufferschacht hindurchführt, wobei die Abzugs-Magnetvorrichtung gegenüber dem umlaufenden Förder- oder Riemenband des Bandförderers ortsfest angeordnet ist. Die elektrisch schaltbare Magnet-Abzugsvorrichtung kann von der Folgemaschine angesteuert bzw. taktweise elektrisch beaufschlagt werden, um die Dosendeckel oder sonstige Elemente entsprechend dem Arbeitstakt der Folgemaschine aus dem Pufferschacht abzuziehen.

Der Antrieb der vorgenannten Brems- und Übergabevorrichtung wird zweckmäßig in Abhängigkeit vom Füllstand der Spreizmagnet-Pufferzone gesteuert werden, was sich mit Hilfe einer Minimum/Maximum-Steuerung unter Verwendung von Sensoren erreichen läßt, die die jeweilige Stapelhöhe in der Pufferzone abtasten. Bei einem vorbestimmten Befüllungszustand wird die Brems- und Übergabevorrichtung angesteuert, so daß diese die Elemente aus der Pufferzone in die Spreizzone bzw. in die Zwischenpufferzone überführt.

Die erfindungsgemäß vorgesehene Brems- und Übergabevorrichtung läßt sich in unterschiedlicher Weise ausgestalten. Sie weist zweckmäßig motorisch betätigte Bremsglieder auf, die sich reibungsschlüssig gegen die im Fußbereich des Stapelpakets befindlichen Elemente andrücken. Diese Bremsglieder konnen ebenfalls unterschiedlich ausgeführt werden. Sie können aus Brems- bzw. Druckbacken bestehen, die mittels eines gesteuerten Stellantriebs von der Seite her gegen den Umfang der gestapelten Elemente anstellbar sind, so daß die beschriebene Brems- und Haltewirkung zustande kommt. Durch kurzzeitiges Lüften der Druckbacken od.dgl. läßt sich der Abteilvorgang, d.h. das Abteilen der jeweils im Stapelpaket untenliegenden Elemente von dem überlagernden Stapelpaket und die Überleitung dieser abgeteilten Elemente in den unteren Schachtbereich herbeiführen.

In bevorzugter Ausgestaltung der Erfindung werden für die genannten Bremsglieder angetriebene Bremsrollen verwendet, die vorzugsweise aus einem nachgiebig-verformbaren Werkstoff, wie vor allem Kunststoff, Gummi od.dgl., bestehen oder an ihren Anlageflächen mit einem solchen Werkstoff belegt sind. Es empfiehlt sich im übrigen, die Anordnung so zu treffen, daß die beiden auf gegenüberliegenden Seiten des Pufferschachtes angeordneten Bremsrollen mit gegenläufiger Drehrichtung von einem gemeinsamen Regelgetriebemotor, z.B. über einen Ketten- oder Riemenantrieb od.dgl., angetrieben werden.

Der Pufferschacht bzw. seine Schachtwandung wird zweckmäßig von parallelen Profilleisten, vorzugsweise U-Profilleisten, gebildet, die die verschiedenen Magnetsysteme tragen und an denen auch die Brems- und Übergabevorrichtung gelagert werden kann. Dabei wird die Anordnung vorteilhafterweise so getroffen, daß zwischen zwei im Abstand zueinander angeordneten Profilleisten schlitzartige Eingriffsöffnungen für die Bremsglieder bzw. die Bremsrollen vorhanden sind, wobei zweckmäßig in den schlitzartigen Eingriffsöffnungen Führungsstäbe od.dgl. vorgesehen werden, wie dies an sich bekannt ist.

Der erfindungsgemäße Spreizmagnet-Pufferschacht ist bevorzugt für die Magazinierung von aus Stahlblech gefertigten Dosendeckeln unterschiedlicher Art einschließlich der bei Getränkedosen verwendeten Dosendeckel geeignet und bestimmt. Er kann hier mit Vorteil als Zwischenpuffer bzw. -magazin zwischen einer Vormaschine, z.B. einer Deckelstanze, und einer Folgemaschine, z.B. einer Gummiermaschine oder einer kombinierten Anroll- und Gummiermaschine angeordnet werden. Es versteht sich aber, daß der erfindungsgemäße Spreizmagnet-Pufferschacht auch als Stapelmagazin für andere stapelbaren Elemente, beispielsweise für Flachscheiben bzw. Platinen, Ronden, Ringscheiben u.dgl., verwendbar ist. Vorzugsweise wird der erfindungsgemäße Spreizmagnet-Pufferschacht als Vertikalschacht ausgeführt; er kann aber auch als zur Vertikalen geneigter Pufferschacht ausgeführt werden.

Die Erfindung wird nachfolgend im Zusammenhang mit dem in der Zeichnung gezeigten Ausführungsbeispiel näher erläutert. In der Zeichnung zeigen:
- Fig. 1: einen erfindungsgemäßen Spreizmagnet-Pufferschacht mit den zugeordneten Vorrichtungsteilen in schematischer Vereinfachung in Seitenansicht;
- Fig. 2: einen Querschnitt nach Linie II-II der Fig. 1;
- Fig. 3: den Spreizmagnet-Pufferschacht nach den Fig. 1 und 2 in einem Ausschnitt und in der Seitenansicht nach Fig. 1;
- Fig. 4: in einem Ausschnitt den Spreizmagnet-Pufferschacht im Bereich seiner Brems- und Übergabevorrichtung;
- Fig. 5: in starker Vergrößerung und im Schnitt eine mögliche Formgestaltung der Dosendeckel, die in dem Spreizmagnet-Pufferschacht zu einer Stapelsäule bzw. einem Stapelpaket gespeichert werden können.

Bei dem dargestellten Ausführungsbeispiel handelt es sich um einen Spreizmagnet-Pufferschacht der Vertikal-Bauart zur Magazinierung von aus Stahlblech gefertigten Dosendeckeln. Der Spreizmagnet-Pufferschacht 1 ist als Zwischenpuffer zwischen einer Vormaschine und einer Folgemaschine angeordnet, wobei die Vormaschine z.B. aus einer Deckelstanze bzw. Deckelformpresse und die Folgemaschine z.B. aus einer Gummier- bzw. einer kombinierten Anroll- und Gummiermaschine besteht. Die Deckel 2 werden von der (nicht dargestellten) Vormaschine über eine Fördervorrichtung 3 dem Spreizmagnet-Pufferschacht 1 im oberen Bereich zugeführt. Die dem Pufferschacht am unteren Auslauf 4 vereinzelt entnommenen Deckel 2 werden mit Hilfe eines Abzugsförderers 5 der (nicht dargestellten) Folgemaschine zugeführt.

Eine mögliche Gestaltung der Deckel 2 ist in Fig. 5 gezeigt. Die die Deckelmaschine (Deckelstanze bzw. Deckelformpresse) verlassenden Deckel 2 weisen einen nach unten angekippten umlaufenden Deckelrand 6 auf, der im wesentlichen vertikal nach unten weist, aber noch nicht die übliche Anrollung aufweist. Diese Anrollung kann in der Folgemaschine erfolgen, die zweckmäßig als kombinierte Anroll- und Gummiermaschine ausgebildet ist, so daß in dieser Machine zugleich die Gummierung in den Deckelfalz 7 eingebracht werden kann. Es ist erkennbar, daß zwischen den angekippten Deckelrändern 6 der lagegerecht übereinandergestapelten Deckel 2 bei 8 keine ausgeprägte Eingriffslücke für den Eingriff der üblichen Abteilmesser der gebräuchlichen Abteilvorrichtungen vorhanden ist. Solche Eingriffslücken ergeben sich erst bei Anrollung der Deckelränder 6.

Die vorgenannte Fördervorrichtung 3 kann, wie dargestellt, aus einem Band- oder Riemenförderer bestehen, dessen an der Deckelabwurfseite befindliche Umlenkrolle 9 sich im oberen Einlaufbereich 10 des Pufferschachtes 1 befindet. Die Deckelzuführung zu dem Pufferschacht 1 kann mit Hilfe derjenigen Vorrichtung erfolgen, wie sie in der DE-PS 33 36 151 beschrieben ist, auf deren Offenbarungsinhalt hier Bezug genommen wird. Der aus einem endlosen Band- bzw. Riemenförderer bestehende Abzugsförderer 5 ist im unteren Auslaufbereich 4 des Pufferschachtes 1 quer durch diesen hindurchgeführt. Er übergibt die vereinzelt dem Puffermagazin 1 entnommenen Deckel 2 z.B. der Einlaufschnecke 11 der genannten Folgemaschine.

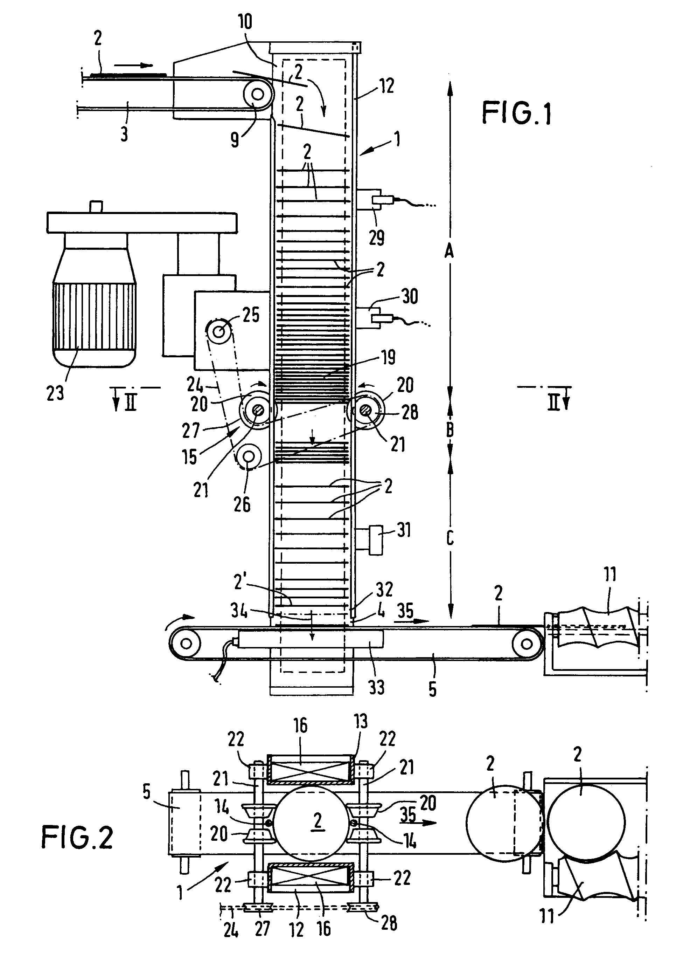

Der Spreizmagnet-Pufferschacht 1 wird, wie an sich bekannt, von zwei parallelen Profilleisten 12 und 13 gebildet, die aus U-Profilen bzw. aus zu einem U-Profil gekanteten antimagnetischen Stahlblechteilen bestehen, wie dies vor allem Fig.2 zeigt. Die Profilleisten 12 und 13 sind mit den Rückenflächen der U-Profilstege einander zugewandt, die somit die Schachtwandung an den beiden gegenüberliegenden Seiten des Pufferschachtes 1 bilden. In den beiden sich über die Länge der Profilleisten 12 und 13 erstreckenden Zwischenräumen ist mittig jeweils ein Führungsstab 14 vorgesehen, der vorzugsweise aus einem Rundstab besteht und sich vom Einlaufbereich des Pufferschachtes bis in Nähe des Auslaufbereiches desselben erstreckt.

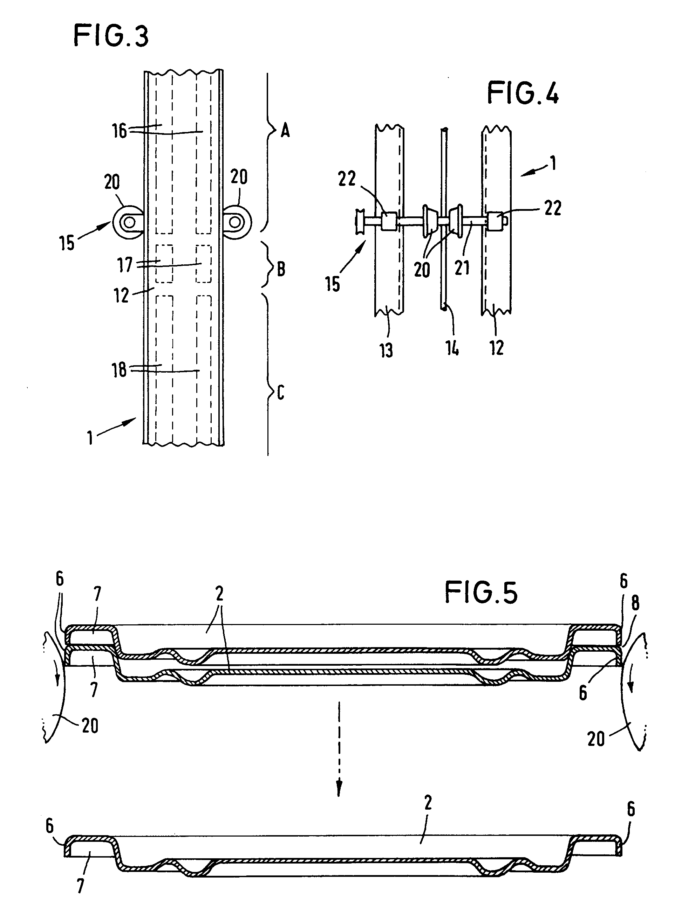

Spreizmagnet-Pufferschächte, die in der vorstehend beschriebenen Weise aus zwei parallelen U-Profilleisten 12 und 13 und in den Zwischenräumen zwischen diesen angeordneten Führungsstäben 14 bestehen, sind bekannt. Dabei ist es auch bekannt, die Permanent-Magnete des Magnetsystems im Inneren der U-Profilleisten 12 und 13 anzuordnen. Im vorliegenden Fall ist der Pufferschacht 1 in seiner Längsrichtung in drei Teilbereiche, d.h. in drei Zonen unterteilt, nämlich in eine obere Spreizmagnet-Pufferzone A, eine sich unten an diese anschließende kurze magnetische Zwischenpufferzone B und eine sich an diese unten anschließende permanentmagnetische Spreizzone C. Die Spreizmagnet-Pufferzone A erstreckt sich vom oberen Einlaufbereich des Puffermagazins 1 über den größten Längenbereich des Puffermagazins bis zu einer an diesem angeordneten Brems- und Übergabevorrichtung 15, die an der Schnittstelle zu der darunterliegenden Zwischenpufferzone B angeordnet ist. Die sich an die Zwischenpufferzone B anschließende Spreizzone C erstreckt sich nach unten bis in Nähe des Auslaufbereiches des Puffermagazins. Jeder Zone A, B und C ist ein gesondertes, aus Permanentmagneten bestehendes Magnetsystem mit bezüglich der Magnetstärke und der Magnetwirkung spezifischen Eigenschaften zugeordnet. In Fig. 3 ist das der Spreizmagnet-Pufferzone A zugeordnete Magnetsystem mit 16, das der Zwischenpufferzone B zugeordnete Magnetsystem mit 17 und das der auslaufseitigen Spreizzone C zugeordnete Magnetsystem mit 18 bezeichnet. Die Permanentmagnete dieser drei Magnetsysteme 16, 17, 18 befinden sich im Inneren der U-Profilleisten 12 und 13, wie dies in Fig. 2 für das Magnetsystem 16 gezeigt ist.

Wie erwähnt, werden in den drei Zonen A, B und C unterschiedliche magnetische Wirkungen auf die im Puffermagazin 1 befindlichen Deckel 2 ausgeübt. Das Magnetsystem 16 der oberen Spreizmagnet-Pufferzone A ist hinsichtlich seiner Ausgestaltung und Magnetwirkung entsprechend den Magnetsystemen der bekannten Spreizmagnet-Pufferschächte ausgeführt. Das bedeutet, daß die am oberen Einlauf 10 in den Pufferschacht 1 abgegebenen Deckel 2 durch die den Pufferschacht in Querrichtung durchdringenden Magnetfelder des Magnetsystems 16 in die Horizontallage ausgerichtet werden, so daß sie zugleich unter Schwerkraftwirkung durch die Wandungsteile 12 13, 14 des Pufferschachtes geführt in diesem abwärts gleiten können, um in der Spreizmagnet-Pufferzone A einen Deckelstapel bzw. ein Stapelpaket 19 oberhalb der Brems- und Übergabevorrichtung 15 zu bilden. In Fig. 1 ist der Stapelvorgang in der Pufferzone A angedeutet, wobei die Deckel 2 in Form von einfachen Strichlinien gezeigt sind. Die durch den Einlauf 10 in den Pufferschacht 1 gelangenden Deckel 2 werden nicht nur magnetisch in die Horizontallage ausgerichtet, sondern zunächst im oberen Bereich der Pufferzone A magnetisch gegeneinander abgespreizt und magnetisch in Schwebe gehalten. Beim Einlauf weiterer Deckel 2 in den Pufferschacht 1 verringern sich die Spreizabstände zwischen den übereinander liegenden Deckeln 2 zunehmend, wobei die bereits im Pufferschacht 1 befindlichen Deckel 2 im Pufferschacht 1 nach unten wandern, bis sie sich lagegerecht aufeinanderlegen und somit das Stapelpaket 19 bilden. An der Schnittlinie zu der Zwischenpufferzone B wird das sich bildende Stapelpaket 19 durch die Brems- und Übergabevorrichtung 15 gegen Abwärtsbewegung im Pufferschacht 1 bremsend gehalten.

Die Brems- und Übergabevorrichtung 15 weist zwei auf diametral gegenüberliegenden Seiten des Stapelpakets 19 angeordnete Bremsglieder in Gestalt von Bremsrollen 20 auf, die aus Formrollen bestehen und aus verformbarem Werkstoff, wie Kunststoff, Gummi od.dgl. hergestellt sind oder an ihren umfangsseitigen Anlageflächen, mit denen sie sich gegen die Deckel 2 anlegen, mit einem solchen Werkstoff belegt sind. Die Bremsrollen 20 sitzen jeweils auf einer Welle 21, die beiderseits der zugeordneten Bremsrolle in Stehlagern 22 seitlich an den Profilleisten 12 und 13 gelagert ist. Fig. 2 zeigt, daß die beiden Bremsrollen 20 jeweils aus einer doppelten Konusrolle oder aus einer konisch gemuldeten Einzelrolle bestehen und infolge dieser Gestaltung die vertikalen Führungsstäbe 14 mit Spiel umgreifen. Die Bremsrollen 20 liegen mit ihrem Umfang reibungsschlüssig am Deckelrand an, wie dies auch in Fig. 5 schematisch angedeutet ist. Sie werden mit gegenläufiger Drehrichtung von einem gemeinsamen Regelgetriebemotor 23 über einen Ketten- oder Zahnriemenantrieb 24 über ein Antriebsrad 25 und die Umlenkräder 26, 27 und 28 angetrieben, wobei die Umlenkräder 27 und 28 auf den Wellen 21 der Bremsrollen 20 angeordnet sind. Der Regelgetriebemotor 23 ist ebenso wie die Brems- und Übergabevorrichtung 15 an der von den Profilleisten 12 und 13 gebildeten Schachtwandung des Pufferschachtes 1 gelagert. Die beiden Bremsrollen 20 liegen im Inneren der an den beiden gegenüberliegenden Seiten des Pufferschachtes 1 zwischen den Profilleisten 12 und 13 angeordneten schlitzartigen Öffnungen, in deren Mitte sich die Führungsstäbe 14 befinden. Bei stehendem Regelgetriebemotor 23 wird das in der Spreizmagnet-Pufferzone A befindliche Stapelpaket 19 von den Bremsrollen 20 gehalten, die dabei reibungsschlüssig am Umfang des oder der im Stapelpaket untenliegenden Deckel 2 anliegen.

Wie Fig. 1 zeigt, weist der Spreizmagnet-Pufferschacht 1 im Bereich der Pufferzone A im Abstand übereinander angeordnete Sensoren 29 und 30 einer sogenannten Minimum/Maximum-Steuerung auf. Die Sensoren 29 und 30 tasten die jeweilige Stapelhöhe des Deckelstapels 19 in der Pufferzone A ab. Bei einem vorgegebenen oberen Befüllungszustand, der von dem oberen Sensor 29 erfaßt wird, wird die Vormaschine angesteuert bzw. ausgeschaltet. Ein in der Spreizzone C an der Wandung des Pufferschachtes 1 angeordneter Flächensensor 31 tastet den Befüllungsgrad bzw. die Dichtigkeit der in der Spreizzone C jeweils anstehenden Deckelsäule ab und beschaltet den Getriebemotor 23 in der Weise, daß sich innerhalb der auslaufseitigen Spreizzone C stets eine zumindest angenähert gleichbleibende Anzahl von Deckeln 2 befindet. Über die Ansteuerung des Getriebemotors 23 durch den Flächensensor 31 wird somit die Abteilung der Deckel 2 von dem magazinierten Deckelpaket 19 durch die Bremsrollen 20 so gesteuert, daß sich in der auslaufseitigen Spreizzone C jeweils eine zumindest angenähert konstante Anzahl an Deckeln 2 befindet. Das Magnetsystem 17 der Zwischenpufferzone B stabilisiert die abgegebenen Deckel 2 in der Horizontallage. Die Magnetwirkung des Magnetsystems 17 ist derart, daß die von den Bremsrollen 20 in die Zwischenpufferzone B geförderten Deckel 2 unter Schwerkraftwirkung in der Zwischenzone nach unten sinken und daß bei einer Befüllung der Zwischenpufferzone B mit einer vorbestimmten Anzahl an Deckeln 2 diese einzeln und in einer von dem Zulauf der Deckel aus der oberen Pufferzone A abhängigen Folge nach unten in die auslaufseitige Spreizzone C übergeben werden.

Während das Magnetsystem 17 der verhältnismäßig kurzen Zwischenpufferzone B verhältnismäßig schwach ausgelegt sein kann, da hier keine größere magnetische Spreizung der Deckel 2 erforderlich ist, ist das Magnetsystem 18 der auslaufseitigen Spreizzone C in seiner Magnetstärke so ausgelegt, daß die Deckel 2 hier unter Wahrung ihrer Horizontallage verhältnismäßig weit gegeneinander gespreizt sind, wobei sich die Spreizabstände auch innerhalb der Spreizzone C von oben nach unten zunehmend in Abhängigkeit vom Befüllungsgrad der Spreizzone verringern, wie dies Fig. 1 erkennen läßt. Im unteren Auslaufbereich der Spreizzone C ist aber stets der unterste Deckel 2 noch gegenüber dem darüberliegenden Deckel magnetisch gespreizt, also magnetisch im Abstand von diesem Deckel gehalten.

Das Magnetsystem 18 der Spreizzone C ist so ausgebildet, daß es am unteren Ende dieser Spreizzone einen sogenannten magnetischen Haltepunkt bei 32 bildet, so daß der jeweils in der Spreizzone C untenliegende, in Fig. 1 bis 2' angedeutete, magnetisch in Schwebe gehaltene Deckel die Spreizzone C nicht zum Auslauf 4 hin ohne äußere Krafteinwirkung verlassen kann. Unterhalb des magnetischen Haltepunktes 32 ist zwischen den von den Profilleisten 12 und 13 gebildeten seitlichen Schachtwänden der oben erwähnte horizontale Abzugsförderer 5 sowie eine elektrische Magnetabzugsvorrichtung 33 angeordnet, bei deren elektrischer Beschaltung der jeweils in der Spreizzone C untenliegende Deckel 2' unter Überwindung des magnetischen Haltepunktes 32 in Pfeilrichtung 34 aus der Spreizzone C magnetisch abgezogen wird. Bei dem gezeigten Ausführungsbeispiel befindet sich die Magnetabzugsvorrichtung 33 etwa in Höhe des oberen Fördertrums des aus einem Band- oder Riemenförderer bestehenden Abzugsförderers 5. Sie ist hier ortsfest am Fuß des Pufferschachtes angeordnet. Bei elektrischer Schaltung der Magnetabzugsvorrichtung 33 wird somit der genannte Deckel 2' über den magnetischen Haltepunkt 32 hinweg auf das Transportband des Abzugsförderers 5 gezogen, so daß er von diesem seitlich durch den Auslauf 4 hindurch in Pfeilrichtung 35 zur Folgemaschine hin befördert wird.

Die Magnetabzugsvorrichtung 33 wird zweckmäßig nach Maßgabe des Deckelbedarfs der nachgeschalteten Folgemaschine gesteuert. Das von der Folgemaschine gegebene Steuersignal bewirkt, daß jedesmal, wenn ein Deckel 2 von der Folgemaschine benötigt wird, die elektrisch schaltbare Magnetabzugsvorrichtung 33 geschaltet wird und somit den jeweils untersten Deckel 2' aus der auslaufseitigen Spreizzone C des Puffermagazins 1 zieht und somit der Folgemaschine zuführt.

Wie vorstehend dargelegt ist, wird mit Hilfe des die Brems- und Übergabevorrichtung 15 bzw. deren Antrieb steuernden Sensors 31 der Deckelfüllstand in der auslaufseitigen Spreizzone C zumindest weitgehend konstant gehalten. Die vorgenannte Minimum/Maximum-Steuerung mit den Sensoren 29 und 30 schaltet die Vormaschine bei Erreichen einer vorgegebenen maximalen Höhe des Stapelpakets 19 ab und bewirkt bei einer vorgegebenen Mindesthöhe des Stapelpakets 19 durch Ansteuerung der Brems- und Übergabevorrichtung 15, daß die Zwischenpufferzone B stets mit einer vorbestimmten Anzahl an Deckeln befüllt wird, so daß aus der Zwischenpufferzone B die Spreizzone C ständig aufgefüllt wird.

Es versteht sich, daß der Spreizmagnet-Pufferschacht auch als Stapelmagazin einer anderen Folgemaschine, z.B. einer Dosen-Verschließmaschine vorgeschaltet werden kann.

## Patentansprüche

1. Spreizmagnet-Pufferschacht (1) für die Magazinierung scheibenförmiger Elemente (2) aus magnetisierbarem Werkstoff, insbesondere von Dosendeckeln aus Stahlblech, in Gestalt eines Stapelpakets, mit an der Wandung des Pufferschachtes (1) angeordneten, von Permanentmagneten gebildeten Spreizmagnetsystemen (16, 18), die im oberen Bereich des Pufferschachtes (1) unterhalb seines oberen Einlaufbereichs (10) eine Spreizmagnet-Pufferzone (A) für das von den zugeführten Elementen (2) gebildete Stapelpaket (19) und im Bereich zwischen dieser Spreizmagnet-Pufferzone (A) und dem unteren Auslaufbereich (4) des Pufferschachtes (1) eine auslaßseitige permanentmagnetische Spreizzone (C) für die Elemente (2) bilden, und mit einer am unteren Auslaufbereich des Pufferschachtes (1) angeordneten Vorrichtung zur Einzelentnahme der Elemente (2), **dadurch gekennzeichnet, daß** zwischen der oberen Spreizmagnet-Pufferzone (A) und der darunter befindlichen auslaufseitigen permanentmagnetischen Spreizzone (C) eine das Stapelpaket (19) der Spreizmagnet-Pufferzone (A) haltende und die Elemente (2) dieses Stapelpakets (19) in die auslaufseitige permanentmagnetische Spreizzone (C) überführende, motorisch gesteuerte Brems- und Übergabevorrichtung (15) angeordnet ist, die mit sich reibungsschlüssig gegen die im Fußbereich des Stapelpakets (19) befindlichen Elemente (2) legenden Bremsgliedern (20) versehen ist.

2. Spreizmagnet-Pufferschacht nach Anspruch 1, **dadurch gekennzeichnet**, daß er unterhalb der Spreizmagnet-Pufferzone (A) und der Brems- und Übergabevorrichtung (15) eine magnetische Zwischenpufferzone (B) aufweist, an die sich zum Auslaufbereich des Pufferschachtes (1) hin die auslaufseitige Spreizzone (C) anschließt, deren permanentmagnetisches Spreizmagnetsystem (18) so ausgelegt ist, daß es die aus der Zwischenpufferzone zulaufenden Elemente (2) für die Einzelentnahme im Spreizzustand zueinander hält.

3. Spreizmagnet-Pufferschacht nach Anspruch 1 oder 2, **dadurch gekennzeichnet,** daß die auslaufseitige Spreizzone (C) in ihrem unteren Bereich in Nähe des Auslaufs (4) des Pufferschachtes (1) einen magnetischen Haltepunkt (32) aufweist.

4. Spreizmagnet-Pufferschacht nach einem der Ansprüche 1 bis 3, **dadurch gekennzeichnet,** daß am Auslauf (4) des Pufferschachtes (1) eine das in der auslaufseitigen Spreizzone (C) jeweils untenliegende Element (2') aus der genannten Spreizzone (C) zum Auslauf hin abziehende elektrische Magnetabzugsvorrichtung (33) angeordnet ist.

5. Spreizmagnet-Pufferschacht nach Anspruch 4, **dadurch gekennzeichnet,** daß die gesteuerte Magnetabzugsvorrichtung (33) einem Abzugsförderer (5) zugeordnet ist.

6. Spreizmagnet-Pufferschacht nach Anspruch 5, **dadurch gekennzeichnet,** daß der Abzugsförderer (5) aus einem Bandförderer, Zahnriemen-, Kettenförderer od.dgl. besteht.

7. Spreizmagnet-Pufferschacht nach Anspruch 5 oder 6, **dadurch gekennzeichnet,** daß der Abzugsförderer (5) unterhalb der auslaufseitigen Spreizzone (C) quer durch den Pufferschacht (1) hindurchgeführt ist, wobei die Magnetabzugsvorrichtung (33) ortsfest angeordnet ist.

8. Spreizmagnet-Pufferschacht nach einem der Ansprüche 1 bis 7, **dadurch gekennzeichnet,** daß der Antrieb (23) der Brems- und Übergabevorrichtung (15) in Abhängigkeit vom Füllstand in der Spreizmagnet-Pufferzone (A) gesteuert ist.

9. Spreizmagnet-Pufferschacht nach einem der Ansprüche 4 bis 8, **dadurch gekennzeichnet,** daß die Magnetabzugsvorrichtung (33) nach Maßgabe des Bedarfs einer nachgeschalteten Folgemaschine gesteuert ist.

10. Spreizmagnet-Pufferschacht nach einem der Ansprüche 1 bis 9, **dadurch gekennzeichnet,** daß die Bremsglieder aus angetriebenen Bremsrollen (20) od.dgl. bestehen.

11. Spreizmagnet-Pufferschacht nach Anspruch 1 oder 10, **dadurch gekennzeichnet,** daß die Bremsglieder (20) aus verformbarem Werkstoff, wie Kunststoff, Gummi od.dgl., bestehen oder mit aus diesem Werkstoff bestehenden Anlageflächen versehen sind.

12. Spreizmagnet-Pufferschacht nach Anspruch 10 oder 11, **dadurch gekennzeichnet,** daß die beiden auf gegenüberliegenden Seiten des Pufferschachtes (1) angeordneten Bremsrollen (20) mit gegenläufiger Drehrichtung von einem gemeinsamen Regelgetriebemotor (23), z.B. über einen Ketten- oder Zahnriementrieb od.dgl., angetrieben sind.

13. Spreizmagnet-Pufferschacht nach einem der Ansprüche 1 bis 12, **dadurch gekennzeichnet,** daß er aus die Schachtwandung bildenden, die Spreizmagnetsysteme (16, 17, 18) aufweisenden parallelen Profilleisten (12, 13), vorzugsweise U-Profilleisten, besteht, an denen die Brems- und Übergabevorrichtung (15) gelagert ist.

14. Spreizmagnet-Pufferschacht nach Anspruch 13, **dadurch gekennzeichnet,** daß zwischen den beiden im Abstand zueinander angeordneten Profilleisten (12, 13) schlitzartige Eingriffsöffnungen für die Bremsglieder bzw. die Bremsrollen (20) angeordnet sind.

15. Spreizmagnet-Pufferschacht nach Anspruch 14, **dadurch gekennzeichnet,** daß in den schlitzartigen Eingriffsöffnungen Führungstäbe (14) angeordnet sind.

16. Spreizmagnet-Pufferschacht nach Anspruch 15, **dadurch gekennzeichnet,** daß die Bremsrollen (20) jeweils aus einer beiderseits des Führungsstabes (14) angeordneten Doppelrolle oder aus mit Einziehungen für den freien Durchgang des Führungsstabes (14) versehenen Formrollen bestehen.

## Claims

1. A spreader magnet buffer shaft (1) for the magazining of disc-shaped elements (2) made of magnetisable material, particularly can lids made of sheet steel, in the form of a stacked pile, having spreader magnet systems (16, 18) disposed at the wall of the buffer shaft (1) and formed from permanent magnets, which spreader magnet systems form a spreader magnet buffer zone (A), in the upper region of the buffer shaft (1) underneath the upper inlet region (10) thereof, for the stacked pile (19) formed from the elements (2) supplied, and which form a permanent magnetic spreader zone (C) on the discharge side for the elements (2) in the region between the said spreader magnet buffer zone (A) and the lower discharge region (4) of the buffer shaft (1), and having a device for the individual withdrawal of the elements (2) which is disposed in the lower discharge region of the buffer shaft (1), characterised in that a motor-controlled braking and transfer device (15), which retains the stacked pile (19) of the spreader magnet buffer zone (A) and which conveys the elements (2) of this stacked pile (19) into the permanent magnetic spreader zone (C) on the discharge side, is disposed between the upper spreader magnet buffer zone (A) and the permanent magnetic spreader zone (C) which is situated thereunder on the discharge side, which braking and transfer device is provided with braking members (20) placed with frictional contact against the elements (2) situated in the base region of the stacked pile (19).

2. A spreader magnet buffer shaft according to claim 1, characterised in that underneath the spreader magnet buffer zone (A) and the braking and transfer device (15) it has a magnetic intermediate buffer zone (B) which is followed by the spreader zone (C) on the discharge side towards the discharge region of the buffer shaft (1), the permanent magnetic spreader magnet system (18) of which spreader zone is designed so that it holds the elements (2) issuing from the intermediate buffer zone in a spread state in relation to each other for their individual withdrawal.

3. A spreader magnet buffer shaft according to claim 1 or 2, characterised in that the spreader zone (C) on the discharge side has a magnetic stop (32) in its lower region in the vicinity of the discharge (4) of the buffer shaft (1).

4. A spreader magnet buffer shaft according to any one of claims 1 to 3, characterised in that an electromagnetic take-off device (33) is disposed at the discharge (4) of the buffer shaft (1) and takes off the element (2') which is situated lowermost each time in the spreader zone (C) on the discharge side, from the said spreader zone (C) towards the discharge.

5. A spreader magnet buffer shaft according to claim 4, characterised in that the controlled magnetic take-off device (33) is associated with a take-off conveyor (5).

6. A spreader magnet buffer shaft according to claim 5, characterised in that the take-off conveyor (5) consists of a belt conveyor, a toothed belt conveyor, a chain conveyor or the like.

7. A spreader magnet buffer shaft according to claim 5 or 6, characterised in that the take-off conveyor (5) is led transversely through the buffer shaft (1) underneath the spreader zone (C) on the discharge side, wherein the magnetic take-off device (33) is disposed fixed.

8. A spreader magnet buffer shaft according to any one of claims 1 to 7, characterised in that the drive (23) of the braking and transfer device (15) is controlled depending on the level in the spreader magnet buffer zone (A).

9. A spreader magnet buffer shaft according to any one of claims 4 to 8, characterised in that the magnetic take-off device (33) is controlled according to the requirement of a following machine disposed downstream.

10. A spreader magnet buffer shaft according to any one of claims 1 to 9, characterised in that the braking members consist of driven brake rollers (20) or the like.

11. A spreader magnet buffer shaft according to claim 1 or 10, characterised in that the braking members (20) consist of a deformable material, such as plastic, rubber or the like, or are provided with contact surfaces consisting of these materials.

12. A spreader magnet buffer shaft according to claim 10 or 11, characterised in that the two brake rollers (20) disposed on opposite sides of the buffer shaft (1) are driven in opposite directions of rotation by a common control gear motor (23), e.g. via a chain or a toothed belt drive or the like.

13. A spreader magnet buffer shaft according to any one of claims 1 to 12, characterised in that it consists of parallel sectional cover strips (12, 13), preferably U-section strips, forming the shaft wall and comprising the spreader magnet systems (16, 17, 18), and on which the braking and transfer device (15) is mounted.

14. A spreader magnet buffer shaft according to claim 13, characterised in that slot-like engagement apertures for the braking members or the brake rollers (20) are disposed between the two sectional cover strips (12, 13) which are disposed at a distance from each other.

15. A spreader magnet buffer shaft according to claim 14, characterised in that guide rods (14) are disposed in the slot-like engagement apertures.

16. A spreader magnet buffer shaft according to claim 15, characterised in that the brake rollers (20) each consist of a double roller disposed on both sides of the guide rod (14), or of shaped rollers with necked regions for the free passage of the guide rod (14).

## Revendications

1. Gaine tampon à aimant écarteur (1) pour le stockage d'éléments en forme de disques en matériau magnétisable, en particulier de couvercles de boîtes en tôle d'acier, sous la forme d'un paquet empilé, avec des systèmes d'aimants écarteurs (16, 18) disposés contre la paroi de la gai ne tampon (1), formés par des aimants permanents, qui dans la zone supérieure de la gaine tampon (1) forment, au-dessus de sa zone d'entrée supérieure (10), une zone tampon à aimant écarteur (A) pour le paquet empilé (19), formé par les éléments (2) alimentés et, dans la région entre cette zone tampon à aimant écarteur (A) et la zone de sortie inférieure (4) de la gaine tampon (1), une zone d'écartement (C) magnétique permanente côté sortie pour les éléments (2), et comportant un dispositif, situé dans la zone de sortie inférieure de la gaine tampon (1), pour le prélèvement individuel des éléments (2), caractérisée en ce qu'entre la zone tampon à aimant écarteur (A) supérieure et la zone d'écartement (C) magnétique permanente côté sortie, située au-dessous, il est prévu un dispositif de freinage et de transfert motorisé (15) maintenant le paquet empilé (19) de la zone tampon à aimant écarteur (A) et transférant les éléments (2) de ce paquet empilé (19) dans la zone d'écartement (C) magnétique permanente côté sortie, lequel dispositif est pourvu d'organes de frein (20) s'appliquant par friction contre les éléments (2) se trouvant dans la zone de pied du paquet empilé (19).

2. Gaine tampon à aimant écarteur selon la revendication 1, caractérisée en ce qu'il comporte, au-dessous de la zone tampon à aimant écarteur (A) et le dispositif de freinage et de transfert (15), une zone tampon intermédiaire magnétique (B), à laquelle fait suite, vers la zone de sortie de la gaine tampon (1), la zone d'écartement (C) côté sortie, dont le système d'aimant écarteur (18) magnétique permanent est conçu de manière à maintenir à l'état écarté les éléments (2) provenant de la zone tampon intermédiaire, pour le prélèvement individuel.

3. Gaine tampon à aimant écarteur selon les revendications 1 ou 2, caractérisée en ce que la zone d'écartement (C) côté sortie présente, dans sa région inférieure, à proximité de la sortie (4) de la gaine tampon (1), un point de maintien magnétique (32).

4. Gaine tampon à aimant écarteur selon l'une des revendications 1 à 3, caractérisée en ce qu'à la sortie (4) de la gaine tampon (1) est prévu un dispositif d'extraction à aimant (33) électrique, tirant vers la sortie, hors de la zone d'écartement (C), l'élément (2') situé au-dessous dans la zone d'écartement (C) citée, côté sortie.

5. Gaine tampon à aimant écarteur selon la revendication 4, caractérisée en ce que le dispositif d'extraction à aimant (33) commandé est associé à un convoyeur d'extraction (5).

6. Gaine tampon à aimant écarteur selon la revendication 5, caractérisée en ce que le convoyeur d'extraction (5) est constitué d'un convoyeur à tapis, d'un convoyeur à courroie crantée, d'un convoyeur à chaîne ou similaire.

7. Gaine tampon à aimant écarteur selon les revendications 5 ou 6, caractérisée en ce que le convoyeur d'extraction (5) passe au-dessous de la zone d'écartement (C) côté sortie, transversalement à la gaine tampon (1), le dispositif d'extraction à aimant (33) étant placé fixe.

8. Gaine tampon à aimant écarteur selon l'une des revendications 1 à 7, caractérisée en ce que l'entraînement (23) du dispositif de freinage et de transfert (15) est commandé en fonction du niveau de remplissage dans la zone tampon à aimant écarteur (A).

9. Gaine tampon à aimant écarteur selon l'une des revendications 4 à 8, caractérisée en ce que le dispositif d'extraction à aimant (33) est commandé suivant les besoins d'une machine suivante montée en aval.

10. Gaine tampon à aimant écarteur selon l'une des revendications 1 à 9, caractérisée en ce que les organes de freinage sont constitués de rouleaux de freinage (20) entraînés ou similaires.

11. Gaine tampon à aimant écarteur selon les revendications 1 ou 10, caractérisée en ce que les organes de freinage (20) sont réalisés dans un matériau déformable, tel qu'une matière plastique, du caoutchouc ou similaire, ou sont pourvus de surfaces d'application réalisées dans ce matériau.

12. Gaine tampon à aimant écarteur selon les revendications 10 ou 11, caractérisée en ce que les deux rouleaux de freinage (20), disposés sur des côtés opposés de la gaine tampon (1), sont entraînés en sens de rotation contraire par un motoréducteur de réglage commun (23), par exemple par un entraînement à chaîne ou à courroie crantée ou similaire.

13. Gaine tampon à aimant écarteur selon l'une des revendications 1 à 12, caractérisée en ce qu'elle est constituée de baguettes profilées (12, 13), de préférence des baguettes profilées en U, parallèles, comportant les systèmes à aimants écarteurs (16, 17, 18), formant la paroi de la gaine, sur lesquelles est monté le dispositif de freinage et de transfert (15).

14. Gaine tampon à aimant écarteur selon la revendication 13, caractérisée en ce qu'entre les deux baguettes profilées (12, 13) espacées l'une de l'autre, sont prévues des ouvertures d'engagement en forme de fentes pour les organes de freinage ou les rouleaux de freinage (20).

15. Gaine tampon à aimant écarteur selon la revendication 14, caractérisée en ce que dans les ouvertures d'engagement en forme de fentes sont prévues des barres de guidage (14).

16. Gaine tampon à aimant écarteur selon la revendication 15, caractérisée en ce que les rouleaux de freinage (20) sont constitués chacun d'un double rouleau situé de part et d'autre de la barre de guidage (14) ou de rouleaux de forme pourvus de parties en retrait pour le libre passage de la barre de guidage (14).
